# EUROPÄISCHE PATENTSCHRIFT

(11) **EP 1 430 760 B1**
(45) Veröffentlichungstag und Bekanntmachung des Hinweises auf die Patenterteilung: **20.06.2007**
(21) Anmeldenummer: 03027966.5
(22) Anmeldetag: 05.12.2003
(51) Int. Cl.: A01B 63/22

(54) **Höhenverstellvorrichtung**
Height adjusting device
Dispositif de réglage de la hauteur

(30) Priorität: 19.12.2002 US 326672
(43) Veröffentlichungstag der Anmeldung: 23.06.2004
(73) Patentinhaber: DEERE & COMPANY, Moline, Illinois 61265-8098 (US)
(72) Erfinder: Steinlage, David Lee, IA 50003 Adel (US); Mosdal, Brian Thomas, IA 50021 Ankeny (US); Noonan, James Thomas, IA 50035 Bondurant (US); Goins, Garrett Lee, IA 50021 Ankeny (US); Royer, Anthony Scott, IA 50167 Minburn (US); Payne, David Alan, IA 50322 Urbandale (US)
(74) Vertreter: Holst, Sönke

(56) Entgegenhaltungen:
- US-A- 3 917 004
- US-A- 3 924 694
- US-A- 4 221 266
- US-A- 4 324 411

## Beschreibung

Die Erfindung betrifft eine Höhenverstellvorrichtung für ein landwirtschaftliches Gerät, mit einem einen vorderen Träger aufweisenden Rahmen, einer Anhängevorrichtung, welche mit dem vorderen Träger verbunden und zum Anhängen an ein Zugfahrzeug zum Vorwärtsbewegen über ein Feld ausgebildet ist und einem hinter dem vorderen Träger ausgebildeten hinteren Rahmenbereich.

Landwirtschaftliche Geräterahmen für gezogene Geräte, wie beispielsweise Bodenbearbeitungsgeräte oder Sämaschinen oder dergleichen, weisen typischerweise ein Ausgleich-Hebesystem auf. Eine mit Höheneinstellrädern verbundene rückwärtig montierte Schwenkwellen-Schweißkonstruktion ist mittels einer komplexen Gestängeanordnung mit einer Anhängevorrichtung und schwenkbar mit der Vorderseite des Rahmens verbunden. Ein Steuerhebel ist über ein Gestänge mit der Anhängevorrichtung verbunden. Wenn zur Änderung der Stellung der Höheneinstellräder relativ zum Rahmen die Schwenkwelle verdreht wird, wird das Gerät angehoben bzw. abgesenkt, wobei die Gestängeanordnung die Anhängevorrichtung verschwenkt, um einen Schwenkausgleich zur Aufrechterhaltung eines im Wesentlichen waagerechten Zustands des Rahmens vorzunehmen.

Die meisten Ausgleich-Hebesysteme mit Schwenkwellen weisen eine relativ hohe Anzahl an Bauteilen und Verschleißstellen auf. Als Folge dessen sind derartige Systeme üblicherweise gewichtig und teuer ausgebildet. Eine große Anzahl von Verschleißstellen machen ein derartiges System unzuverlässig. Konventionell wird das schwere Schwenkwellensystem heckseitig angeordnet, wodurch unvorteilhafter Weise ein erheblicher Anteil des Gewichtes auf das Heck des Gerätes verlagert wird. Torsionsbedingtes Verdrehen der Schwenkwelle ist ein weiteres häufiges Problem, daher muss die Schwenkwelle eine bestimmte Wandstärke aufweisen, um den Torsionskräften standhalten zu können und ein Verdrehen zu vermeiden. Eine Notwendigkeit, die sich auf das Gewicht und die Kosten des Gerätes auswirken. Die Schwenkwelle ist extremen Stoßbeanspruchungen ausgesetzt, insbesondere wenn das Gerät in eine Transportstellung gebracht und vollständig angehoben wird.

In der US 3,924,694 A wird ein Pflug offenbart, der eine mittig zum Rahmen angeordnete Schwenkwelle einer Radhebeanordnung für Stützräder aufweist. Die Radhebeanordnung umfasst Schwenkarme, welche einen Teil eines mit der Schwenkwelle verbundenen Parallelogrammgestänges bilden, wobei die Stützräder über das Parallelogrammgestänge gegenüber dem Rahmen vertikal höhenverstellbar sind. Die in US 3,924,694 A offenbarte Radhebeanordnung weist konstruktiv bedingt nachteilige Hebelverhältnisse auf, was zu großen und schweren Bauteilanordnungen und zu unvorteilhaften Gewichtsverteilungen führt.

In der US 3,917,004 A wird eine Einstellvorrichtung für den Rahmen eines Scheibenpflugs offenbart, wobei der Rahmen in einer Schwenkbewegung um eine mit den Rädern verbundene Achse derart verschwenkbar geneigt wird, dass entweder am hinteren Teil des Rahmen angeordnete Arbeitsgeräte oder am vorderen Teil des Rahmens angeordnete Arbeitsgeräte den Boden berühren oder der Rahmen derart ausgerichtet wird, das alle Arbeitsgeräte über dem Boden gehalten werden. Nachteilig wirkt sich aus, dass der Rahmen nicht parallel zum Boden verstellbar ist, sondern der Rahmen entweder in eine nach vorn oder in eine nach hinten geneigte Stellung gebracht wird. Dies ist bei einer Vielzahl von Anwendungen, z. B. bei Anwendungen, die eine Höhenverstellung mit gleichen Abständen zum Boden der auf dem Rahmen vorn und hinten angeordneten Arbeitsgeräte erfordern, ungeeignet.

Die der Erfindung zu Grunde liegende Aufgabe wird darin gesehen, eine Höhenverstellvorrichtung der eingangs genannten Art anzugeben, durch welche die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß weist eine Höhenverstellvorrichtung der eingangs genannten Art folgende Merkmale auf: Eine Endbereiche aufweisende Schwenkwelle, Schwenkhalterungen, welche die Endbereiche mit dem vorderen Träger zum Drehen um eine quer zur Vorwärtsrichtung gelegenen Achse verbinden, Hebeschwenkarme, welche sich benachbart zu den Schwenkhalterungen radial von den Endbereichen erstrecken, Hubzylinder, welche zur Drehung der Schwenkachse um die Achse zwischen dem Rahmen und den Hebeschwenkarmen angeordnet sind, anhebbare Radeinrichtungen, welche rückwärtig zu den Schwenkhalterungen mit dem hinteren Rahmenbereich verbunden sind und Verbindungen, welche sich von vorne nach hinten erstrecken und an vorderen Enden mit den Hebeschwenkarmen und an hinteren Enden mit den anhebbaren Radeinrichtungen durch Schwenkarmen, die über den Rahmen ragen, verbunden sind, um bei Drehung der Schwenkwelle die anhebbaren Radeinrichtungen zum Heben und Senken des Rahmens zu betätigen.

Die Schwenkwelle ist über dem vorderen Träger des Rahmens des Gerätes montiert und wird durch die an den Endbereichen positionierten Hubzylindern betätigt. Jeder Hubzylinder ist mit einem Hebeschwenkarm verbunden, der sich radial von dem Endbereich der Schwenkwelle erstreckt und direkt mit der sich in Längsrichtung erstreckenden Verbindung verbunden ist. Die Verbindungen betätigen mit dem Rahmen verbundene anhebbare Radeinrichtungen. Für Niveauausgleichsbewegungen ist in der Nähe der Mitte der Schwenkwelle ein Ausgleichsschwenkarm angeordnet, der direkt mit einer in der Anhängevorrichtung enthaltenen Ausgleichsstange verbunden ist, so dass komplizierte Winkelhebeleinrichtungen nicht erforderlich sind. Durch Verwendung von an den Endbereichen positionierten Hubzylindern mit direkter Verbindung zu den Hebeschwenkarmen wird der Einsatz eines parallelen/seriellen Hydraulikkreises ermöglicht, wobei Torsionsbelastungen im Wesentlichen nur durch von Ausgleichsbewegungen der Anhängekupplung hervorgerufene Kräfte entstehen. Drei oder mehr einstellbar positionierbare Schwenkhalterungen für die Schwenkwelle verbinden die Schwenkwelle mit dem vorderen Träger des Rahmens des Gerätes, wobei die Verbindungsstellen im Wesentlichen zu den Schwenkarmen und zu der Anhängekupplung ausgerichtet sind. Die Anordnung der Hubzylinder, Halterungen und Schwenkarme sorgt für eine minimale Torsionsbelastung und ermöglicht damit die Verwendung einer dünnwandigeren Schwenkwelle, wodurch Kosten und Gewicht eingespart werden können. Wenn die Schwenkwelle derart verschwenkt wird, dass der Rahmen des Gerätes vollständig zum Transport angehoben und in einen für Stoßbeanspruchungen empfindlichen Zustand gebracht wird, ist die Torsionsbeanspruchung minimal, so dass größtenteils Spannungen reduziert und die Funktionssicherheit des Rahmens und des Hebesystems verbessert werden. Die reduzierte Anzahl an Komponenten, verbesserte Belastungsbedingungen und eine verbesserte Gewichtsverteilung liefern einen rentablen, stabilen und zuverlässigen Rahmen für ein Gerät.

Die Vorteile der Erfindung liegen darin, dass ein verbessertes Schwenkwellensystem für ein Gerät geschaffen wird, welches gegenüber den meisten bisher erhältlichen Schwenkwellensystemen kostengünstiger herstellbar, zuverlässiger im Betrieb und vorteilhafter bei der Gewichtsverteilung ist. Des Weiteren sorgt das System für geringere Verdrehungen der Schwenkwelle, weniger komplexe Montage- und Gestängeeinrichtungen sowie weniger Verschleißstellen.

Des Weiteren wird im Vergleich zu den meisten bisher erhältlichen Geräterahmen ein relativ kostengünstiger Geräterahmen mit einem ökonomischen Ausgleich-Hebesystem mit Schwenkwelle, mit einer besseren Gewichts- und Belastungsverteilung und mit weniger Verschleißstellen geschaffen.

Anhand der Zeichnungen, die ein Ausführungsbeispiel der Erfindung zeigen, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine Perspektivansicht eines multisektionalen Bodenbearbeitungsgeräts mit einem erfindungsgemäßen Hebe- und Ausgleichsystem,
- Fig. 2: eine vergrößerte Perspektivansicht eines mittleren Abschnitts des Rahmens des Gerätes aus Figur 1 mit teilweise abgebauten Bauteilen,
- Fig. 3: eine Seitenansicht eines Bereiches aus dem mittleren Abschnitt des Gerätes aus Figur 1,
- Fig. 4: eine Ansicht ähnlich zu der Ansicht aus Figur 3, bei einer für das Gerät angehobenen Transportstellung,
- Fig. 5: eine Frontansicht eines Teilbereichs des Gerätes aus Figur 1 und
- Fig. 6: eine schematische Darstellung eines Hydraulikkreises für das Hebesystem des Gerätes aus Figur 1.

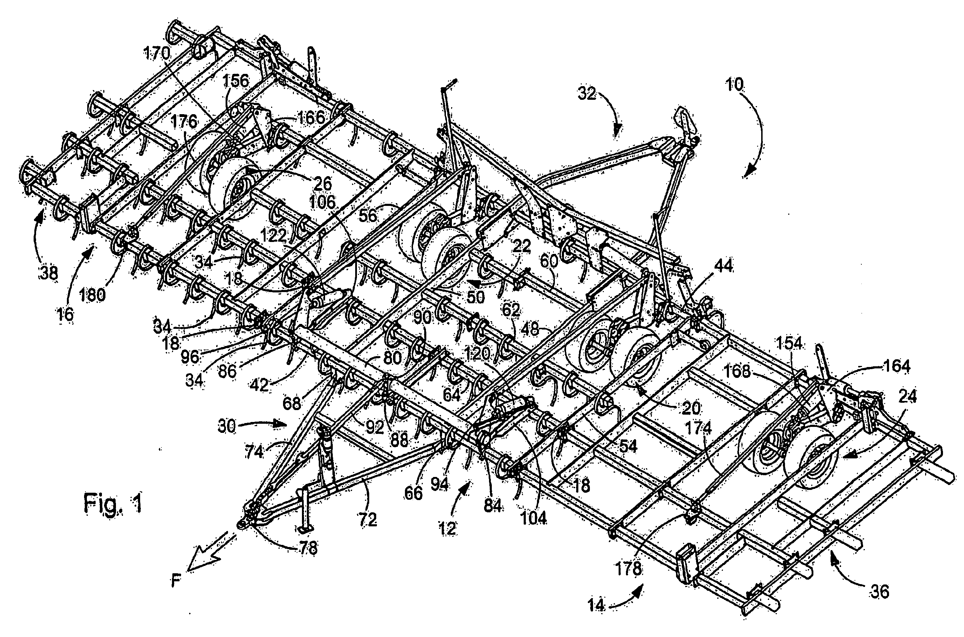

Figur 1 zeigt ein Teil eines landwirtschaftlichen Bodenbearbeitungsgeräts 10 mit einem Zentral- oder Hauptrahmen 12 und Seitenrahmen 14, 16, welche mit einer Schwenkeinrichtung 18 schwenkbar mit den äußeren Enden des Hauptrahmens verbunden sind. Der Hauptrahmen 12 wird von anhebbaren Radeinrichtungen 20, 22 getragen. Die Seitenrahmen weisen anhebbare Radeinrichtungen 24, 26 auf, welche die Seitenrahmen 14, 16 tragen. Eine frontseitig angeordnete Anhängevorrichtung 30 verbindet das Gerät 10 zur Erzeugung einer Vorwärtsbewegung F gegenüber dem Boden mit einem Zugfahrzeug (nicht gezeigt). Eine Anhängevorrichtung 32 ermöglicht ein Anhängen eines gezogenen Spritzgerätes oder eines anderen gezogenen Gerätes an das Heck des Rahmens 12. Zur Bearbeitung des Bodens werden Werkzeuge 34 von den Rahmen 12, 14, 16 getragen. Wie in Figur 1 dargestellt ist, weist das Gerät 10 außengelegene Seiteneinrichtungen 36, 38 auf, welche an die Seitenrahmen 14, 16 angehängt sind.

Der Hauptrahmen weist einen vorderen und einen hinteren, sich quer erstreckenden Träger 42, 44 auf, welche durch innenliegende und außenliegende, sich nach vorn und hinten erstreckende Träger 48, 50 und 54, 56 verbunden sind. Dazwischenliegende sich quer erstreckende Rahmenelemente 60, 62, 64 sind zwischen dem vorderen und hinteren Träger 42, 44 angeordnet. Von dem vorderen Träger erstrecken sich Halterungen 66, 68 und tragen schwenkbar das hintere Ende von zwei in Vorwärtsrichtung konvergierenden und auf entgegengesetzten Seiten zur Mittelachse des Gerätes 10 liegenden Anhängeträgern 72, 74 der Anhängevorrichtung 30. Die vorderen Enden der Träger 72, 74 sind mit einer Anhängekupplung 78 verbunden.

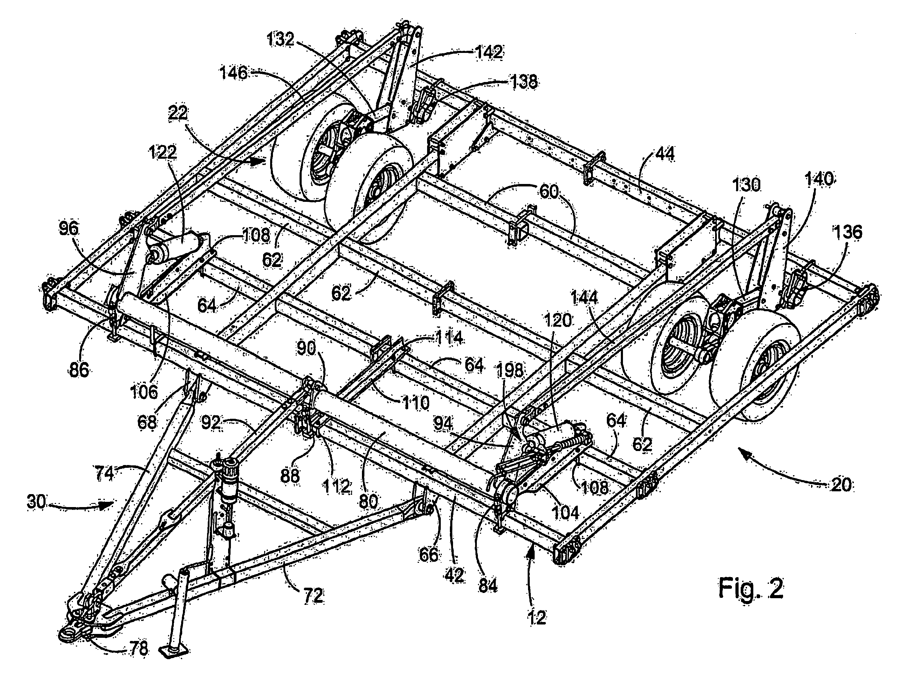

Zum Drehen um eine parallel zum Träger 42 gelegenen Achse ist eine Schwenkwelle 80 direkt über dem vorderen Träger 42 durch schmale äußere Schwenkhalterungen 84, 86 und durch eine schmale mittlere Schwenkhalterung 88 (siehe auch Figur 2) drehbar gelagert. Ein sich nach oben erstreckender mittlerer Ausgleichsschwenkarm 90 ist in der Mitte der Schwenkwelle 80 direkt neben der mittleren Schwenkhalterung 88 befestigt. Eine längeneinstellbare sich von vorn nach hinten erstreckende Ausgleichsstange 92 weist ein hinteres Ende auf, welches schwenkbar mit dem außengelegenen Ende des mittleren Ausgleichsschwenkarms 90 verbunden ist. Das vordere Ende der Ausgleichsstange 92 ist schwenkbar mit der Anhängekupplung 78 verbunden, so dass, wenn die Schwenkwelle 80 verdreht wird, sich der Winkel der Anhängevorrichtung 30 relativ zum Rahmen 12 verändern wird.

Die äußeren Schwenkhalterungen 84, 86 sind neben den gegenüberliegenden Enden der Schwenkwelle 80 angeordnet, wobei direkt neben den Schwenkhalterungen 84, 86 Hebeschwenkarme 94, 96 mit der Schwenkwelle 80 verbunden sind. Als Winkelprofil ausgebildete Halterungen 104, 106 enthalten vordere Enden, welche mit den Schwenkhalterungen 84, 86 verbunden sind und hintere Enden, welche durch U-förmig ausgebildete Verbindungsbolzen 108 mit den querverlaufenden Rahmenelementen 64 verbunden sind. Eine als Winkelprofil ausgebildete mittlere Halterung 110 weist ein vorderes Ende, welches durch U-förmig ausgebildete Verbindungsbolzen 112 mit dem vorderen Träger 42 direkt neben der Schwenkhalterung 88 verbunden ist, und ein hinteres Ende auf, welches durch U-förmig ausgebildete Verbindungsbolzen 114 mit dem Rahmenelement 64 verbunden ist.

Hydraulische Zylinder 120 und 122 enthalten kolbenseitige Enden, welche an die hinteren Enden der Halterungen 104, 106 über den Rahmenelementen 64 angeordnet sind. Zum Verdrehen der Schwenkwelle 80 durch Aus- und Einfahren der Zylinder sind die stangenseitigen Enden mit den Hebeschwenkarmen 94, 96 verbunden. Die anhebbaren Radeinrichtungen 20, 22 enthalten nach unten und vorne gerichtete Radhebearme 130, 132, welche durch in Querrichtung einstellbare Halterungen 136, 138 an ausgewählt beabstandeten Schwenkpositionen mit dem hinteren Träger 44 verbunden sind. Ausgehend von den Radhebearmen 130, 132, in Vorwärtsrichtung neben den Schwenkpositionen der Radhebearme 130, 132 ragen Schwenkarme 140, 142 in Aufwärtsrichtung über den Rahmen 12. Sich von vorn nach hinten erstreckende Verbindungen 144, 146 sind schwenkbar mit den oberen Enden der Schwenkarme 140, 142 und den oberen Enden der vorderen Hebeschwenkarme 94, 96 der Schwenkwelle 80 verbunden. Wenn die Zylinder 120, 122 ausgefahren sind, schwenken die Schwenkarme 94, 96, 140, 142 nach vorne, um die Radhebearme 130, 132 nach unten zu schwenken und den Rahmen 12 anzuheben. Gleichzeitig wird die Anhängevorrichtung 30 nach unten geschwenkt um einen Nivellierausgleich des Gerätes 10 zu erwirken.

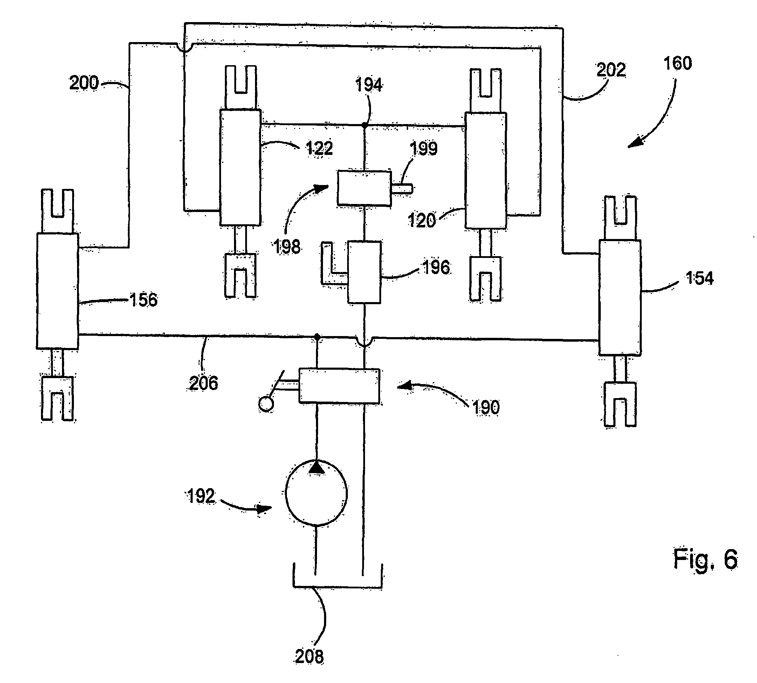

Wie in Figur 1 gezeigt wird, weisen die anhebbaren Radeinrichtungen 24, 26 an den äußeren Seitenrahmen 14, 16 Hubzylinder 154, 156 auf, welche in einem parallelen/seriellen Hydraulikkreis 160 (siehe Figur 6) mit den Hubzylindern 120, 122 verbunden sind. Die Hubzylinder 154, 156 sind zwischen für die anhebbaren Radeinrichtungen 24, 26 ausgebildete Haltevorrichtungen 164, 166 angeordnet und einstellbar an ausgewählten Rahmenträgern und an vorderen Enden von Hebearmen 168, 170 montiert. Einstellbare Verbindungen 174, 176 erstrecken sich ausgehend von den Haltevorrichtungen 164, 166 nach vorn zu im vorderen Bereich angeordneten Verbindungselementen 178, 180. Durch Veränderung der Länge der Verbindungen 174, 176 können die Stellungen der Räder an den anhebbaren Radeinrichtungen 24, 26 relativ zu den Seitenrahmen 14, 16 eingestellt werden, um einen Höhenausgleich der Seitenrahmen 14, 16 und dergleichen vorzunehmen. In Figur 1 ist die Flexibilität der Systeme für die anhebbaren Radeinrichtungen 20, 22, 24, 26 dargestellt, welche eine Auswahl von Radstellungen zur Anpassung an verschiedene Stellungen für Werkzeug und Zubehör ermöglichen und Anordnungsmöglichkeiten an verschiedenen Geräterahmenausführungen bieten.

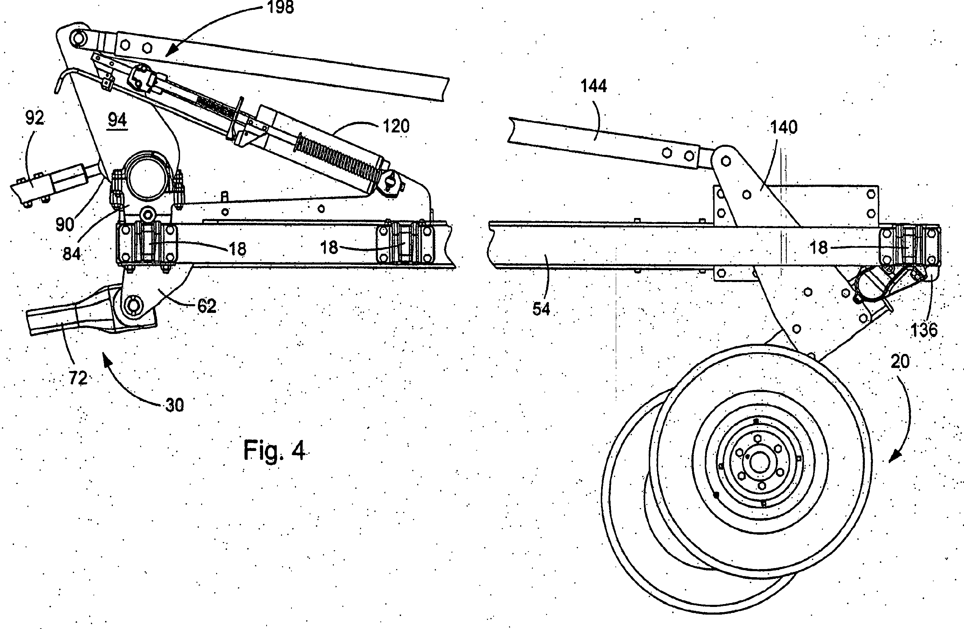

Der in Figur 6 dargestellte Hydraulikkreis 160 weist eine konventionelle Steuerventileinrichtung 190 auf, welche auf dem Zugfahrzeug angeordnet und mit einer auf dem Fahrzeug angeordneten Quelle 192 für druckbeaufschlagte Hydraulikflüssigkeit verbunden ist. Eine Hydraulikleitung 194 verbindet die kolbenseitigen Enden der Hubzylinder 120, 122 mit der Steuerventileinrichtung 190 über ein für eine Transportstellung vorgesehenes Schließventil 196 und über ein normalerweise geöffnetes Steuerventil 198 (siehe auch Figur 4) einer Einpunkt-Tiefeneinstellvorrichtung, wobei das Schließventil 198 eine Schaltvorrichtung 199 aufweist, die das Schließventil 198 in eine Schließstellung bringt, wenn der Hubzylinder 120 eine voreingestellte Einfahrstellung erreicht, um eine Tiefeneinstellung festzulegen. Eine derartige Tiefeneinstellvorrichtung wird beispielsweise in der US-Patentanmeldung vom 25.Oktober 2002 mit dem Aktenzeichen 10/281,443 offenbart.

Das stangenseitige Ende des Hubzylinders 120 ist über eine Hydraulikleitung 200 mit dem kolbenseitigen Ende des Hubzylinders 156 des Seitenrahmens 16 verbunden, so dass der Hubzylinder 156 seriell zu dem Hubzylinder 120 betrieben wird. Ähnlich dazu ist für einen seriellen Betrieb der Hubzylinder 122, 154 das stangenseitige Ende des Hubzylinders 122 über eine Hydraulikleitung 202 mit dem kolbenseitigen Ende des Hubzylinders 154 des Seitenrahmens 14 verbunden. Die stangenseitigen Enden der Hubzylinder 154, 156 sind über eine Hydraulikleitung 206 miteinander und mit der Steuerventileinrichtung 190 verbunden.

Bei Betreiben, in der Annahme, dass sich die Hubzylinder 120, 122, 154, 156 in einer voll ausgefahrenen Stellung befinden, tragen die anhebbaren Radeinrichtungen die Rahmen 12, 14, 16 des Geräts 10 in einer angehobenen Transportstellung. Das Steuerventil 198 der Einpunkt-Tiefeneinstellvorrichtung ist in geöffneter Stellung, wenn der Hauptrahmen 12 über eine voreingestellte Arbeitsstellung hinaus angehoben wird. Bei einer offenen Nicht-Schließstellung für das für die Transportstellung vorgesehene Schließventil 196 (Figur 6) betätigt eine Bedienperson die Steuerventileinrichtung 190 in eine geöffnete Stellung, um die Hydraulikleitungen 194 mit einem Hydraulikreservoir 208 zu verbinden, so dass die Hubzylinder 120, 122 und die seriell mit den Hubzylindern 120, 122 verbundenen Hubzylinder 154, 156 einfahren. Die Hubzylinder 120, 122, 154, 156 fahren im Wesentlichen übereinstimmend ein, bis das Steuerventil 198 der Einpunkt-Tiefeneinstellvorrichtung durch Eindrücken der Schaltvorrichtung 199 geschlossen wird, so dass die Hydraulikleitung 194 blockiert und ein weiteres Absinken des Hauptrahmens 12 verhindert wird. Das Steuerventil 198 ist einstellbar, um die Arbeitstiefe der Werkzeuge 34 zu variieren.

Um das Bodenbearbeitungsgerät 10 während einer abgesenkten Arbeitsstellung anzuheben betätigt die Bedienperson die Steuerventileinrichtung 190 derart, dass die Hydraulikleitung 194 druckbeaufschlagt wird. Ein im Steuerventil 198 angeordnetes Rückschlagventil (nicht gezeigt) erlaubt einen Hydraulikfluss in Richtung der bodenseitigen Enden der Hubzylinder 120, 122, wenn das Steuerventil 198 in einer geschlossenen Stellung ist, so dass die Hubzylinder 120, 122 ausfahren und den Hauptrahmen 12 des Bodenbearbeitungsgeräts 10 anheben können. Wenn die Hubzylinder 120, 122 ausfahren, dann verursacht die aus dem stangenseitigen Ende des Hubzylinders 120 austretende Hydraulikflüssigkeit ein mit dem Hubzylinder 120 übereinstimmendes Ausfahren des Hubzylinders 156. Die aus dem stangenseitigen Ende des Hubzylinders 122 austretende Hydraulikflüssigkeit verursacht ein Ausfahren des Hubzylinders 154 um einen Niveauausgleich zu erwirken. Für den Transport werden die Hubzylinder 120, 122 vollständig ausgefahren und das Schließventil 196 kann in eine Schließstellung gebracht werden, um die Hubzylinder 120, 122 in ihrer ausgefahrenen Stellung festzustellen.

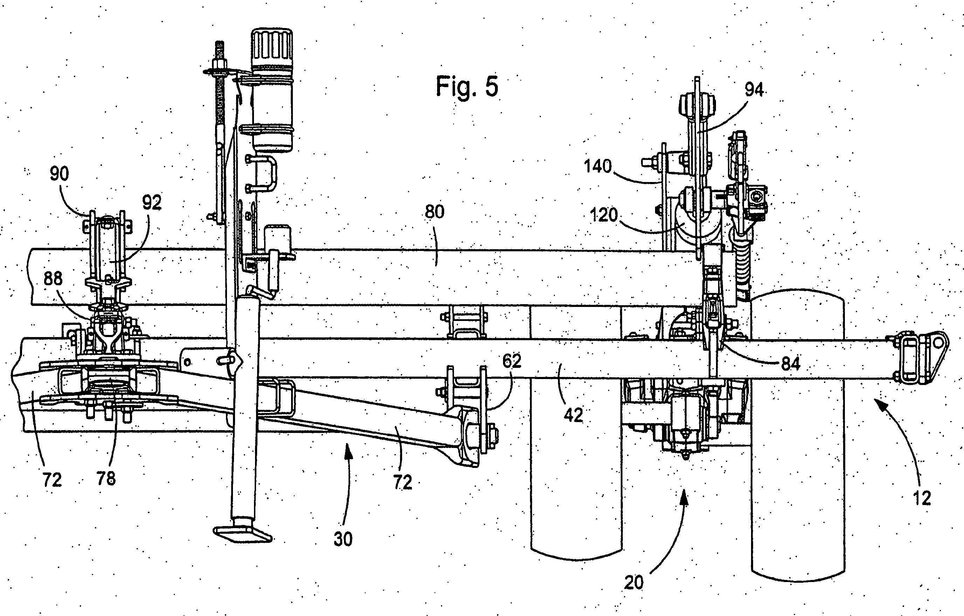

Bei paralleler Betätigung der Hubzylinder 120, 122 an den gegenüberliegenden Enden der Schwenkwelle 80 und bei einer im Wesentlichen mit den entsprechenden Verbindungen 144, 146 für die anhebbaren Radeinrichtungen 20, 22 fluchtenden Anordnung (siehe Figuren 2 und 5), werden Torsionskräfte an der Schwenkwelle 80 minimiert. Als Folge dessen kann im Vergleich zu einer bei einem konventionellen Hebesystem benötigten Schwenkwelle eine leichtere Schwenkwelle 80 eingesetzt werden. Des Weiteren wird durch die Montage der Schwenkwelle 80 an einen vorderen Bereich des Hauptrahmens 12 ermöglicht, dass eine direkte Verbindung der Ausgleichsstange 92 mit dem mittleren Ausgleichsschwenkarm 90 an der Schwenkwelle 80 erfolgen kann. Die Halterungen 84, 104 und 86, 106 sind schmal und auf dem Hauptrahmen 12 des Bodenbearbeitungsgerätes 10 in Querrichtung einstellbar ausgebildet, um einen geringen Störfaktor darzustellen und eine große Flexibilität für die Montage von Werkzeug, Zubehör und Hebe- und Ausgleichsystem zu bieten. Durch die oben beschriebene Verwendung von Halterungen und Ausrichtung von Komponenten des Hebesystems werden bei Betätigung der Hubzylinder 120, 122 verursachte Spannungen im Hauptrahmen 12 ebenfalls reduziert.

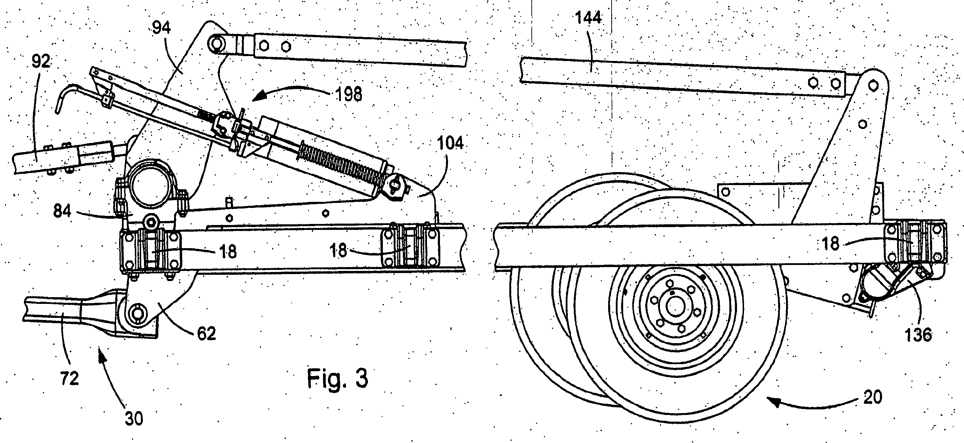

In der angehobenen Transportstellung werden Momenthebel, an denen Kräfte von den anhebbaren Radeinrichtungen 20, 22 und den Verbindungen 92, 144, 146 wirken, minimiert und reduzieren eine Torsionsbeanspruchung der Schwenkwelle 80. Zum Beispiel ist der Momenthebel, durch den die Kräfte durch die Ausgleichstange 92 übertragen werden, in einem maximalen Spannungszustand, wenn die Räder der anhebbaren Radeinrichtungen 20 abgesenkt sind (siehe Figur 4) und die Vorderseite der Anhängevorrichtung 30 abwärts geschwenkt wird um das Bodenbearbeitungsgerät 10 für den Transport auszugleichen, sehr klein, da der mittlere Ausgleichsschwenkarm 90 annähernd zu der Längsachse der Ausgleichsstange 92 ausgerichtet ist. Daher wird in der Transportstellung nur ein kleines Torsionsmoment von der Anhängevorrichtung 30 auf die Schwenkwelle 80 übertragen. Die Momenthebel, durch welche die Kräfte in den Verbindungen 144, 146 auf die Schwenkwelle 80 wirken, erreichen in der Transportstellung ebenso ein Minimum. Normalerweise befinden sich die Hebeschwenkarme 94, 96 entweder zum Transport in einer vollständig nach vorne gerichteten Position (siehe Figur 4) oder bei einer Arbeitsstellung, wenn die Spannungen am größten sind, in einer nach hinten gerichteten Position (siehe Figur 3). Der Zeitraum, in der die Schwenkwelle 80 sich in einer Position befindet, in der die Momenthebel im Wesentlichen aufgerichtet sind und einen maximalen Momenthebel darstellen, ist daher minimal und tritt normalerweise in einer Mittelstellung zwischen Anheben und Absenken ein, wenn die Spannungen geringer sind.

## Patentansprüche

1. Höhenverstellvorrichtung für ein landwirtschaftliches Gerät (10), mit einem einen vorderen Träger (42) aufweisenden Rahmen (12), einer Anhängevorrichtung (30), welche mit dem vorderen Träger (42) verbunden und zum Anhängen an ein Zugfahrzeug zum Vorwärtsbewegen über ein Feld ausgebildet ist und einem hinter dem vorderen Träger (42) ausgebildeten hinteren Rahmenbereich (44), wobei die Höhenverstellvorrichtung folgendes aufweist:
- eine Endbereiche aufweisende Schwenkwelle (80),
- Schwenkhalterungen (84, 86), welche die Endbereiche der Schwenkwelle (80) mit dem vorderen Träger (42) um eine quer zur Vorwärtsrichtung gelegenen Achse drehbar verbinden,
- Hebeschwenkarme (94, 96), welche sich benachbart zu den Schwenkhalterungen (84, 86) radial von den Endbereichen erstrecken,
- Hubzylinder (120, 122), welche zur Drehung der Schwenkachse (80) um die Achse zwischen dem Rahmen (12) und den Hebeschwenkarmen (94, 96) angeordnet sind,
- anhebbare Radeinrichtungen (20, 22), welche rückwärtig zu den Schwenkhalterungen (84, 86) mit dem hinteren Rahmenbereich (44) verbunden sind, wobei die Radeinrichtungen (20, 22) Schwenkarme (140, 142) aufweisen, die über den Rahmen (12) ragen, und
- sich von vorn nach hinten erstreckende Verbindungen (144, 146), welche an vorderen Enden mit den Hebeschwenkarmen (94, 96) und an hinteren Enden mit den Schwenkarmen (140, 142) der anhebbaren Radeinrichtungen (20, 22) verbunden sind, um bei Drehung der Schwenkwelle (80) die anhebbaren Radeinrichtungen (20, 22) zum Heben und Senken des Rahmens (12) zu betätigen.

2. Höhenverstellvorrichtung nach Anspruch 1, **dadurch gekennzeichnet, dass** die Anhängevorrichtung (30) sich in Längsrichtung erstreckt und schwenkbar an einem hinteren Ende mit dem vorderen Träger (42) verbunden ist und ein vorderes Ende aufweist, welches zum Anhängen an ein Zugfahrzeug zum Vorwärtsbewegen über ein Feld ausgebildet ist.

3. Höhenverstellvorrichtung nach Anspruch 1 oder 2, **dadurch gekennzeichnet, dass** eine mit der Anhängevorrichtung (30) verbundene Hebeausgleichvorrichtung vorgesehen ist, welche einen zwischen den Hebeschwenkarmen (94, 96) mit der Schwenkwelle (80) verbundenen Ausgleichsschwenkarm (90) und eine sich in Längsrichtung erstreckende Ausgleichsstange (92) aufweist, wobei die Ausgleichsstange (92) zum vertikalen Bewegen der Anhängevorrichtung (30) bei Betätigung der anhebbaren Radeinrichtung (20, 22) an einem hinteren Ende schwenkbar mit dem Ausgleichsschwenkarm (90) und an einem vorderen Ende mit der Anhängevorrichtung (30) verbunden ist.

4. Höhenverstellvorrichtung nach Anspruch 3, **dadurch gekennzeichnet, dass** eine mittlere Schwenkhalterung (88) vorgesehen ist, welche die Schwenkwelle (80) direkt neben dem Ausgleichsschwenkarm (90) trägt, wobei jeder Hubzylinder (120, 122) zur entsprechenden Verbindung (144, 146) und zum entsprechenden Hebeschwenkarm (94, 96) fluchtend angeordnet ist, so dass zwischen den Hebeschwenkarmen (94, 96) an der Schwenkwelle (80) angreifende Torsionskräfte hauptsächlich von am Ausgleichsschwenkarm (90) wirkenden Kräften resultieren, die durch Ausgleichvorgänge an der Anhängevorrichtung hervorgerufen werden.

5. Höhenverstellvorrichtung nach einem der vorhergehenden Ansprüche, **dadurch gekennzeichnet, dass** der Rahmen (12) rückwärtig zum vorderen Träger (42) angeordnete quer verlaufende Rahmenelemente (60, 62, 64) und Halterungen (104, 106) enthält, welche mit dem vorderen Träger (42) benachbart zu den Schwenkhalterungen (84, 86) verbunden sind und die Hubzylinder (120, 122) tragen, wobei die Hubzylinder (120, 122), Hebeschwenkarme (94, 96), Schwenkhalterungen (84, 86) und Halterungen (104, 106) in Längsrichtung im Wesentlichen zueinander fluchtend angeordnet sind, um Torsions- und Biegemomente an der Schwenkwelle (80) und am Rahmen (12) zu reduzieren.

6. Höhenverstellvorrichtung nach einem der vorhergehenden Ansprüche, **dadurch gekennzeichnet, dass** das Gerät (10) eine angehobene Transportstellung und eine abgesenkte Arbeitsstellung einnehmen.

7. Höhenverstellvorrichtung nach einem der vorhergehenden Ansprüche, **dadurch gekennzeichnet, dass** die Schwenkhalterungen (84, 86) und die anhebbaren Radeinrichtungen (20, 22) Verbindungselemente (108, 112, 114) enthalten, mit denen die Schwenkhalterungen (84, 86) und die anhebbaren Radeinrichtungen (20, 22) an ausgewählten Positionen entlang des Rahmens (12) einstellbar montierbar sind, um verschiedene Positionierungen von Werkzeug (34) und Zubehör zu ermöglichen, ohne dass die Schwenkhalterungen (84, 86) und die anhebbaren Radeinrichtungen (20, 22) dabei hinderlich sind.

8. Höhenverstellvorrichtung nach einem der vorhergehenden Ansprüche, **dadurch gekennzeichnet**, das äußere anhebbare Radeinrichtungen (24, 26) vorgesehen sind, welche mit dem Rahmen (12) verbunden sind und äußere Hubzylinder (154, 156) aufweisen, wobei ein Hydraulikkreis (160) vorgesehen ist, mit dem die Hubzylinder (120, 122) zueinander in einer Parallelanordnung und die äußeren Hubzylinder (154, 156) mit den Hubzylindern (120, 122) in einer seriellen Anordnung betreibbar sind.

9. Höhenverstellvorrichtung nach Anspruch 8, **dadurch gekennzeichnet, dass** der Hydraulikkreis (160) ein Steuerventil (198) einer Einpunkt-Tiefeneinstellvorrichtung aufweist, welches mit den Hubzylindern (120, 122) verbunden ist.

10. Höhenverstellvorrichtung nach einem der vorhergehenden Ansprüche, **dadurch gekennzeichnet, dass** die Hubzylinder (120, 122) an den gegenüberliegenden Endbereichen der Schwenkwelle (80) angeordnet sind.

## Claims

1. Height-adjusting device for an agricultural implement (10), comprising a frame (12) having a front member (42), a coupling device (30), which is connected to the front member (42) and is configured for coupling to a towing vehicle for forward movement over a field, and a rear frame region (44), configured behind the front member (42), wherein the height-adjusting device has the following:
- a pivot shaft (80) having end regions,
- pivot mountings (84, 86), which connect the end regions of the pivot shaft (80) to the front member (42) rotatably about an axis situated transversely to the forward direction,
- lifting pivot arms (94, 96), which extend adjacent to the pivot mountings (84, 86) radially from the end regions,
- lift cylinders (120, 122), which, for the rotation of the pivot shaft (80) about the axis, are disposed between the frame (12) and the lifting pivot arms (94, 96),
- raisable wheel mechanisms (20, 22), which are connected rearward of the pivot mountings (84, 86) to the rear frame region (44), the wheel mechanisms (20, 22) having pivot arms (140, 142) which jut over the frame (12), and
- connecting links (144, 146), which extend from front to rear and which at front ends are connected to the lifting pivot arms (94, 96) and at rear ends to the pivot arms (140, 142) of the raisable wheel mechanisms (20, 22) in order, upon rotation of the pivot shaft (80), to actuate the raisable wheel mechanisms (20, 22) for the lifting and lowering of the frame (12).

2. Height-adjusting device according to Claim 1, **characterized in that** the coupling device (30) extends in the longitudinal direction and is pivotably connected at a rear end to the front member (42) and has a front end which is configured for coupling to a towing vehicle for forward movement over a field.

3. Height-adjusting device according to Claim 1 or 2, **characterized in that** a lift-compensating device connected to the coupling device (30) is provided, which has a compensating pivot arm (90), connected between the lifting pivot arms (94, 96) to the pivot shaft (80), and a longitudinally extending compensating rod (92), which compensating rod (92), for the vertical movement of the coupling device (30) when the raisable wheel mechanism (20, 22) is actuated, is connected at a rear end pivotably to the compensating pivot arm (90) and at a front end to the coupling device (30).

4. Height-adjusting device according to Claim 3, **characterized in that** a middle pivot mounting (88) is provided, which supports the pivot shaft (80) directly next to the compensating pivot arm (90), each lift cylinder (120, 122) being disposed in alignment with the corresponding connecting link (144, 146) and with the corresponding lifting pivot arm (94, 96), so that torsional forces acting between the lifting pivot arms (94, 96) upon the pivot shaft (80) result mainly from forces acting upon the compensating pivot arm (90) and created by compensating operations on the coupling device.

5. Height-adjusting device according to one of the preceding claims, **characterized in that** the frame (12) contains transversely running frame elements (60, 62, 64), disposed rearward of the front member (42), and mountings (104, 106), which are connected to the front member (42) adjacent to the pivot mountings (84, 86) and support the lift cylinders (120, 122), the lift cylinders (120, 122), lifting pivot arms (94, 96), pivot mountings (84, 86) and mountings (104, 106) being disposed essentially in mutual alignment in the longitudinal direction in order to reduce torsional and bending moments on the pivot shaft (80) and on the frame (12).

6. Height-adjusting device according to one of the preceding claims, **characterized in that** the implement (10) can assume a raised transport setting and a lowered work setting.

7. Height-adjusting device according to one of the preceding claims, **characterized in that** the pivot mountings (84, 86) and the raisable wheel mechanisms (20, 22) contain connecting elements (108, 112, 114), with which the pivot mountings (84, 86) and the raisable wheel mechanisms (20, 22) can be mounted adjustably at selected positions along the frame (12) to allow different positionings of tool (34) and accessories without hindrance from the pivot mountings (84, 86) and the raisable wheel mechanisms (20, 22).

8. Height-adjusting device according to one of the preceding claims, **characterized in that** outer raisable wheel mechanisms (24, 26) are provided, which are connected to the frame (12) and have outer lift cylinders (154, 156), a hydraulic circuit (160) being provided, with which the lift cylinders (120, 122) can be operated in a parallel arrangement one to another and the outer lift cylinders (154, 156) are in a serial arrangement with the lift cylinders (120, 122).

9. Height-adjusting device according to Claim 8, **characterized in that** the hydraulic circuit (160) has a control valve (198) of a single-point depth-adjusting device, which control valve is connected to the lift cylinders (120, 122).

10. Height-adjusting device according to one of the preceding claims, **characterized in that** the lift cylinders (120, 122) are disposed at the opposite end regions of the pivot shaft (80).

## Revendications

1. Dispositif de réglage de la hauteur pour une machine agricole (10) comportant un bâti (12), muni d'un support avant (42), un dispositif d'attelage (30), qui est assemblé au support avant (42) et est réalisé pour être attelé à un tracteur pour avancer sur un champ, et une zone de bâti arrière (44) réalisée derrière le support avant (42), le dispositif de réglage de la hauteur comportant les éléments suivants :
- un arbre de pivotement (80) avec des zones d'extrémité,
- des fixations pivotantes (84, 86), par lesquelles les zones d'extrémité de l'arbre de pivotement (80) sont reliées au support avant (42) de manière rotative autour d'un axe orienté perpendiculairement à la direction d'avancement,
- des bras pivotants de levage (94, 96) adjacents aux fixations pivotantes (84, 86) et orientés dans le sens radial à partir des zones d'extrémité,
- des vérins de levage (120, 122) qui sont agencés pour la rotation de l'arbre de pivotement (80) autour de l'axe entre le bâti (12) et les bras pivotants de levage (94, 96),
- des ensembles de roues (20, 22) relevables, qui sont reliés, à l'arrière par rapport aux fixations pivotantes (84, 86), avec la zone de bâti arrière (44), les ensembles de roues (20, 22) étant munis de bras pivotants (140, 142) qui s'avancent au-dessus du bâti (12), et
- des tiges de liaison (144, 146), qui s'étendent de l'avant vers l'arrière et qui au niveau de leurs extrémités avant sont assemblées aux bras pivotants de levage (94, 96) et au niveau de leurs extrémités arrière sont assemblées aux bras pivotants (140, 142) des ensembles de roues (20, 22) relevables, afin d'actionner, lors de la rotation de l'arbre de pivotement (80), les ensembles de roues (20, 22) relevables en vue de relever et abaisser le bâti (12).

2. Dispositif de réglage de la hauteur selon la revendication 1, **caractérisé en ce que** le dispositif d'attelage (30) s'étend dans le sens longitudinal et est assemblé de manière pivotante avec une extrémité arrière contre le support avant (42) et comporte une extrémité avant qui est conçue pour être attelée à un tracteur pour avancer sur un champ.

3. Dispositif de réglage de la hauteur selon la revendication 1 ou 2, **caractérisé en ce qu'**il est prévu un dispositif d'équilibrage du levage, qui est relié au dispositif d'attelage (30) et qui comporte un bras pivotant d'équilibrage (90), assemblé à l'arbre de pivotement (80) entre les bras pivotants de levage (94, 96), et une barre d'équilibrage (92) qui s'étend dans le sens longitudinal, sachant que, pour le mouvement vertical du dispositif d'attelage (30) lors de l'actionnement des ensembles de roues (20, 22) relevables, la barre d'équilibrage (92) est assemblée de manière pivotante avec une extrémité arrière contre le bras pivotant d'équilibrage (90) et avec une extrémité avant contre le dispositif d'attelage (30).

4. Dispositif de réglage de la hauteur selon la revendication 3, **caractérisé en ce qu'**il est prévu un support pivotant central (88), qui porte l'arbre de pivotement (80) directement à côté du bras pivotant d'équilibrage (90), chaque vérin de levage (120, 122) étant agencé en alignement avec la tige de liaison (144, 146) correspondante et avec le bras pivotant de levage (94, 96) correspondant, de telle sorte qu'entre les bras pivotants de levage (94, 96) se produisent des forces de torsion appliquées sur l'arbre de pivotement (80) et résultant essentiellement de forces exercées sur le bras pivotant d'équilibrage (90), qui sont dues à des processus d'équilibrage au niveau du dispositif d'attelage.

5. Dispositif de réglage de la hauteur selon l'une quelconque des revendications précédentes, **caractérisé en ce que** le bâti (12) comporte des éléments de bâti (60, 62, 64), agencés à l'arrière par rapport au support avant (42) et orientés transversalement, et des supports (104, 106), qui sont assemblés au support avant (42) à proximité des fixations pivotantes (84, 86) et qui portent les vérins de levage (120, 122), les vérins de levage (120, 122), les bras pivotants de levage (94, 96), les fixations pivotantes (84, 86) et les supports (104, 106) étant disposés dans le sens longitudinal en étant sensiblement alignés les uns aux autres afin de réduire les couples de torsion et de flexion sur l'arbre de pivotement (80) et sur le bâti (12).

6. Dispositif de réglage de la hauteur selon l'une quelconque des revendications précédentes, **caractérisé en ce que** la machine (10) peut être amenée dans une position de transport haute et une position de travail basse.

7. Dispositif de réglage de la hauteur selon l'une quelconque des revendications précédentes, **caractérisé en ce que** les fixations pivotantes (84, 86) et les ensembles de roues (20, 22) relevables comportent des éléments d'assemblage (108, 112, 114), par lesquels les fixations pivotantes (84, 86) et les ensembles de roues (20, 22) relevables peuvent être montés de manière réglable à des emplacements choisis le long du bâti (12) afin de permettre différents positionnements de l'outil (34) et des accessoires, sans que les fixations pivotantes (84, 86) et les ensembles de roues (20, 22) relevables constituent dans ce cas des obstacles.

8. Dispositif de réglage de la hauteur selon l'une quelconque des revendications précédentes, **caractérisé en ce qu'**il est prévu des ensembles de roues extérieurs (24, 26) relevables, qui sont assemblés au bâti (12) et comportent des vérins de levage extérieurs (154, 156), sachant qu'il est prévu un circuit hydraulique (160), par lequel les vérins de levage (120, 122) peuvent être actionnés entre eux selon un montage en parallèle et les vérins de levage extérieurs (154, 156) peuvent être actionnés avec les vérins de levage (120, 122) dans un montage en série.

9. Dispositif de réglage de la hauteur selon la revendication 8, **caractérisé en ce que** le circuit hydraulique (160) comporte une vanne pilote (198) d'un dispositif de réglage de la profondeur à un point, qui est relié aux vérins de levage (120, 122).

10. Dispositif de réglage de la hauteur selon l'une quelconque des revendications précédentes, **caractérisé en ce que** les vérins de levage (120, 122) sont montés au niveau des zones d'extrémité opposées de l'arbre de pivotement (80).
